# EUROPÄISCHE PATENTSCHRIFT

(11) **EP 3 254 871 B1**
(45) Veröffentlichungstag und Bekanntmachung des Hinweises auf die Patenterteilung: **04.03.2020**
(21) Anmeldenummer: 16173676.4
(22) Anmeldetag: 09.06.2016
(51) Int. Cl.: B60C 9/00, B60C 9/18, B60C 9/20

(54) **VERSTÄRKUNGSLAGE FÜR GEGENSTÄNDE AUS ELASTOMEREM MATERIAL, VORZUGSWEISE FÜR FAHRZEUGLUFTREIFEN UND FAHRZEUGLUFTREIFEN ALS SOLCHER**
REINFORCING PLY FOR OBJECTS MADE OF ELASTOMER MATERIAL, PREFERABLY FOR PNEUMATIC VEHICLE TIRES AND PNEUMATIC VEHICLE TIRES AS SAME
POSITION DE RENFORCEMENT POUR OBJETS COMPOSES DE MATERIAU ELASTOMERE, DE PREFERENCE POUR PNEUS DE VEHICULE ET PNEUS DE VEHICULE EN TANT QUE TELS

(43) Veröffentlichungstag der Anmeldung: 13.12.2017
(73) Patentinhaber: Continental Reifen Deutschland GmbH, 30165 Hannover (DE)
(72) Erfinder: Reese, Wolfgang, 31228 Peine (DE); Kramer, Thomas, 32049 Herford (DE)
(74) Vertreter: Finger, Karsten

(56) Entgegenhaltungen:
- EP-A1- 2 781 367
- WO-A1-2014/001039
- WO-A1-2015/137901

## Beschreibung

Die Erfindung betrifft eine gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger aus Polyamid 6.6 besteht und die Konstruktion x1 aufweist, also ein verdrehtes Multifilamentgarn aus Polyamid 6.6 ist. Die Erfindung betrifft ferner einen Fahrzeugluftreifen, enthaltend diese Verstärkungslage.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomeres Material eingebettet. Die Festigkeitsträger dieser Verstärkungslagen weisen beispielsweise die Form von Geweben oder kalandrierten, endlos gespulten Festigkeitsträgern auf.

Bei Fahrzeugluftreifen werden Multifilamentgarne als Festigkeitsträger beispielsweise im Wulstbereich und in der Gürtelbandage eingesetzt.

Die Gürtelbandage dient bei Fahrzeugluftreifen und insbesondere beim Hochgeschwindigkeitseinsatz dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Laufstreifen und einen Gürtel, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger, die in eine Kautschukmischung eingebettet sind. Die Gürtelbandage wird bei der Reifenherstellung in Form von Lagen, Streifen oder Einzelfestigkeitsträgern mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem beispielsweise eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Oder aber es werden Festigkeitsträger verwendet, die klebrig imprägniert sind und ohne eine kalandrierte Haftmischung verarbeitet werden können. Bei der Bombage und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn dieser Rohling auf einer flachen Trommel gewickelt wird. Somit soll der Festigkeitsträger, welcher in der Gürtelbandage eingesetzt ist, vorteilhafterweise diese Erhebung erlauben, also anfangs mit geringerem Kraftaufwand gedehnt werden können, jedoch nach dieser Anfangsdehnung bis 4% für die Hochgeschwindigkeitstauglichkeit mit nur höherem Kraftaufwand gedehnt werden können. In einem Kraft-Dehnungsdiagramm soll der Festigkeitsträger demnach bis zu einer Dehnung von 4% einen flacheren Verlauf und anschließend einen steileren Verlauf aufweisen.

Die Gürtelbandage ist ein- oder mehrlagig ausgebildet, deckt die Gürtelränder ab und weist parallel und etwa in Umfangsrichtung verlaufende, in Gummi eingebettete Festigkeitsträger auf. "Etwa in Umfangsrichtung" meint einen Winkel von 0° bis 5° in Bezug auf die Reifenumfangsrichtung.

Aus der WO 2014182265 A1 ist ein Fahrzeugluftreifen bekannt, welcher in der Gürtelbandage Festigkeitsträger aus Polyamid 6.6 aufweist.

Aus der US 3,343,363 A sind getwistete Polyamid 6.6 -Filamente, -Garne und -Corde als Festigkeitsträger als Verstärkungsmaterial für Reifen bekannt, welche einen Anfangsmodul zwischen 25 und 60 g/d und eine feinheitsbezogene Festigkeit (Tenacity) größer als 7.0 g/d bei Raumtemperatur aufweisen. Die Werte des Anfangsmoduls sind ermittelt nach ASTM A1380-61T.

Aus der US 3,849,976 A sind Polyamid 6.6 -Corde mit zwei oder mehr Multifilamentgarnen mit einem L₅-Modul größer als 60 g/d als Verstärkungsmaterial für Reifen bekannt, welche durch Verstreckung unter hohen Spannungen bei hohen Temperaturen erhalten sind.

Aus der US 4,284,117 A sind verdrehte Nylon-, Polyester-, Rayon- und Aramidgarne als Festigkeitsträger der Gürtelbandage von Fahrzeugluftreifen bekannt.

Aus der WO 2015/137901 A1 ist ein Fahrzeugluftreifen mit einem Gürtel und einer Gürtelbandage bekannt, wobei die Festigkeitsträger der Gürtelbandage Hybridcorde aus PET-Multifilamentgarnen und Nylon 6.6-Multifilamentgarnen sind. Diese Hybridcorde weisen einen erhöhten Heißschrumpf und Modulus durch bestimmte Behandlungsschritte auf.

Aus der EP 2 781 367 A1 ist eine gummierte Verstärkungslage für Gegenstände aus elastomerem Material bekannt, wobei die Verstärkungslage Hybridcorde aus wenigstens zwei verdrehten Multifilamentgarnen aufweist. Die Hybridcorde bestehen aus einem Viskose-Multifilamentgarn und einem nicht-metallischen Multifilamentgarn, welches nicht aus dem Material Viskose besteht. Das Viskose-Multifilamentgarn wird einer Konditionierung unterzogen, um danach einen Garntiter < 1100 dtex und eine Bruchfestigkeit ≥ 45 cN/tex aufweist und der Hybridcord einen Kordtiter ≤ 3000 dtex aufweist.

Aus der WO 2014/001039 A1 ist ein Hybridcord aus wenigstens einem Garn aus Polyester und wenigstens einem Garn aus Polyamid bekannt, wobei die Garne mit 340 bis 550 t/m miteinander verdreht sind.

Aus dem Stand der Technik ist es bekannt, den Anfangsmodul oder LASE (Load At Specified Elongation) von Polyamid-Festigkeitsträgern zu erhöhen, indem diese bei vergleichsweise hohen Temperaturen heißverstreckt werden. Um die hierdurch erhaltenen Eigenschaften auch nach der Relaxation (konditioniert mit freien geschnittenen Enden unter Laborbedingungen) zu erhalten, war es bisher notwendig, die PA 6.6 -Garne oder - Corde Temperaturbedingungen höher als 250°C auszusetzen. Nachteilig ist jedoch, dass die Garne oder Corde unter den vorstehenden Bedingungen rigide/spröde werden und daher schneller bei Beanspruchung auf Druck- und Biegewechsel ermüden.

Es ist die Aufgabe der Erfindung, eine Verstärkungslage für Gegenstände aus elastomerem Material bereitzustellen, welche Festigkeitsträger aus Polyamid 6.6 mit einem ab 4% Dehnung vergleichbar hohen Modul aufweist, welche jedoch ermüdungsbeständiger in Bezug auf Druck- und Biegewechselbeanspruchung sind. Es ist ferner die Aufgabe der Erfindung, einen Fahrzeugluftreifen bereitzustellen, der eine vorgenannte Verstärkungslage aufweist und welcher verbesserte Hochgeschwindigkeitseigenschaften und einen verbesserten Rollwiderstand aufweist.

Die Aufgabe wird in Bezug auf die Verstärkungslage dadurch gelöst, dass das Rohgarn aus Polyamid 6.6 eine feinheitsbezogene Festigkeit aufweist, welche bei einer Dehnung von 4% in einem Bereich von 1,35cN/dtex bis 1,60 cN/dtex liegt, dass das verdrehte, gedippte und heißverstreckte Multifilamentgarn eine feinheitsbezogene Festigkeit aufweist, welche bei einer Dehnung von 4% in einem Bereich von 2,0 cN/dtex bis 2,8 cN/dtex liegt und dass der Festigkeitsträger einen Heißschrumpf bei 177°C in einem Bereich von 4,0% - 7,0% aufweist, wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

"Rohgarn" meint ein Multifilamentgarn, welches noch nicht heißverstreckt ist. "Multifilamentgarn" meint ein Multifilamentgarn, welches verdreht ist und somit als Festigkeitsträger die Konstruktion x1 aufweist und welches den Prozess der Heißverstreckung incl. Imprägnierung bereits durchlaufen hat.

Es ist eine Verstärkungslage geschaffen, deren Multifilamentgarne aus Polyamid 6.6 bei einer Dehnung von 4% einen höhen E-Modul als vergleichbare Multifilamentgarne aufweisen, welche aber ermüdungsbeständiger in Bezug auf Druck- und Biegewechselbeanspruchungen sind. Diese Eigenschaften eignen sich insbesondere für den Einsatz dieser Verstärkungslage in einem Fahrzeugreifen, insbesondere als Gürtelbandage, da die erforderliche Dehnung bis ca. 3% für die Reifenherstellung weiterhin erhalten ist, während bei höheren Dehnungen höhere Kräfte aufgebracht werden müssen, welches für den Hochgeschwindigkeitsbetrieb des Reifens vorteilhaft ist.

Überraschenderweise werden die Multifilamentgarne aus Polyamid 6.6 für die erfindungsgemäße Verstärkungslage dadurch erhalten, dass das verwendete Rohgarn aus Polyamid 6.6 eine feinheitsbezogene Festigkeit aufweist, welche bei einer Dehnung von 4% in einem Bereich von 1,35 cN/dtex bis 1,60 cN/dtex liegt und dass dieses Rohgarn in einem Bereich größer als 5% und kleiner als 12% bei Temperaturen zwischen 230°C und 250°C verstreckt wird und auf geeignete Spulen mit einer Spannung zwischen 150g und 500g pro Festigkeitsträger aufgespult wird. Hierdurch bleiben die durch den Verstreckprozeß erzielten Eigenschaften auch bei dem auf die Spule aufgewickelten Festigkeitsträger erhalten, da dem Festigkeitsträger eine Relaxation nicht erlaubt ist und ohne die Relaxation, welche immer einen Modul-Verlust bedeutet, im Reifen eingesetzt werden können.

Die Kraft-Dehnungsdaten der Garne sind gemäß D885-16 bestimmt, nach der Konditionierung der Garne auf Spulen für 24 Stunden bei 24°C und einer relativen Luftfeuchtigkeit von 55%. Nach der Konditionierung sind die Garne innerhalb von 1 Minute getestet, nachdem sie von der Spule abgewickelt worden sind.

Diese Multifilamentgarne weisen eine feinheitsbezogene Festigkeit bei 4% Dehnung von 2,0 cN/dtex bis 2,8 cN/dtex und ein Heißschrumpf bei 177°C von 4% bis 7% auf. Die feinheitsbezogene Festigkeit bei 4% Dehnung von 2,0 cN/dtex bis 2,8 cN/dtex entspricht einem Modul von 51 g/dtex bis 71,4 g/dtex (56,7 g/d bis 79,3 g/d).

Die Modul-Werte sind folgendermaßen berechnet: feinheitsbezogene Festigkeit bei 4% Dehnung x 25, um die erforderliche feinheitsbezogene Festigkeit für 100% Dehnung zu erhalten.

Die feinheitsbezogene Festigkeit bei 4% Dehnung [cN/dtex] ist: Zugkraft bei 4% Dehnung [cN] / Feinheit [dtex], wobei die Feinheit des gesamten Festigkeitsträgers herangezogen ist.

Der Heißschrumpf von Garnen bzw. Corden ist ermittelt mit einem Schrumpfmessgerät vom Hersteller Testrite unter einer Vorspannung von 0,045 g/dtex bei 177°C mit 2 Minuten Expositionszeit.

Zweckmäßig ist es, wenn das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt. Würden die Kräfte noch höher sein, könnten diese zu Problemen beim Einformen führen.

Zweckmäßig ist es, wenn das Multifilamentgarn eine Feinheit von 300 bis 4000 dtex aufweist. Dieser Feinheitsbereich stellt einen vorteilhaften Kompromiss bezüglich Festigkeit einerseits und Rollwiderstand bzw. Kosten andererseits dar. Wäre die Feinheit zu gering, d.h. das Multifilamentgarn zu dünn, wäre eine zu geringe Festigkeit erhalten. Wäre das Multifilamentgarn zu dick, wäre dieses nachteilig für den Rollwiderstand des Reifens und nachteilig bezüglich der Kosten.

Vorteilhaft ist es, wenn der Twistfaktor α des Multifilamentgarnes in einem Bereich von 30 bis 50, vorzugsweise in einem Bereich von 35 bis 45 liegt, wobei α = Twist [t/m] · (Feinheit [tex]/ 1000)^{1/2}. Der Twistfaktor ist ein Maß für die Drehung pro Meter des Multifilamentgarens, bezogen auf die Feinheit des Multifilamentgarnes. Dieser Twistfaktor stellt einen vorteilhaften Kompromiss bezüglich Ermüdungsbeständigkeit und Festigkeit dar. Ein geringerer Twistfaktor wäre nachteilig in Bezug auf die Ermüdungbeständigkeit, ein höherer Twistfaktor würde eine geringere Festigkeit des Festigkeitsträgers bedeuten.

In einer ersten besonders geeigneten Ausführung der Erfindung ist der Festigkeitsträger der Verstärkungslage ein Multifilamentgarn mit einer Garnfeinheit von 940 dtex, wobei das Garn eine feinheitsbezogene Festigkeit aufweist, welche bei einer Dehnung von 4% in einem Bereich von 2.0 cN/dtex bis 2.8 cN/dtex liegt und wobei das Multifilamentgarn vorzugsweise in einer Dichte von 100 epdm in der Verstärkungslage angeordnet ist. Durch den im Vergleich zum Stand der Technik erhöhten Modul des PA6.6-Festigkeitsträgers kann dieser in einer geringeren Dichte in der Verstärkungslage angeordnet sein, wodurch die Herstellung dieser Lage einfacher wird und ebenfalls ein Kostenvorteil aufgrund des verringerten Einsatzes an Festigkeitsträgern erreicht ist. Es besteht ebenfalls ein geringeres Risiko, dass das Halbzeug beim Schneiden in die benötigte Streifenbreite beschädigt wird. In einer zweiten besonders geeigneten Ausführung der Erfindung ist der Festigkeitsträger der Verstärkungslage ein Multifilamentgarn mit einer Garnfeinheit von 1400, wobei das Garn eine feinheitsbezogene Festigkeit aufweist, welche bei einer Dehnung von 4% in einem Bereich von 2.0 cN/dtex bis 2.8 cN/dtex liegt und wobei das Multifilamentgarn vorzugsweise in einer Dichte von 90 epdm in der Verstärkungslage angeordnet ist. Durch den im Vergleich zum Stand der Technik erhöhten Modul des PA6.6-Festigkeitsträgers kann dieser in einer geringeren Dichte in der Verstärkungslage angeordnet sein, wodurch die Herstellung dieser Lage einfacher wird und ebenfalls ein Kostenvorteil aufgrund des verringerten Einsatzes an Festigkeitsträgern erreicht ist. Es besteht ebenfalls ein geringeres Risiko, dass das Halbzeug beim Schneiden in die benötigte Streifenbreite beschädigt wird.

Vorteilhaft ist es, wenn die Verstärkungslage eine Gürtelbandagenlage ist, wobei die Festigkeitsträger in Form von gummierten Gewebestreifen oder als gummiertem Gewebe gewickelt sind oder in Form von verdrehten Einzel-Multifilamentgarnen oder als gummierte Streifen, welche mehrere parallele Einzel-Multifilamentgarne aufweisen, spiralig gespult ist. Das Polyamid 6.6 -Multifilamentgarn ist aufgrund seiner physikalischen Eigenschaften besonders für den Einsatz in einer Gürtelbandage geeignet.

Die Verstärkunglage kann aber alternativ ebenfalls ein Wulstverstärker wie ein Chipper oder Flipper sein.

Die Erfindung wird in Bezug auf den Fahrzeugluftreifen gelöst, indem dieser eine vorbeschriebene gummierte Verstärkungslage aufweist. Der Fahrzeugluftreifen weist einen verbesserten Rollwiderstand und bei geeigneter Dichte der Festigkeitsträger in der Gürtelbandage ein verbesserte Hochgeschwindigkeitsperformance auf.

## Patentansprüche

1. Gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger aus Polyamid 6.6 besteht und die Konstruktion x1 aufweist, also ein verdrehtes Multifilamentgarn aus Polyamid 6.6 ist,
**dadurch gekennzeichnet,**
**dass** das Rohgarn aus Polyamid 6.6 eine feinheitsbezogene Festigkeit aufweist, welche bei einer Dehnung von 4% in einem Bereich von 1,35cN/dtex bis 1,60 cN/dtex liegt,
**dass** das verdrehte, gedippte und heißverstreckte Multifilamentgarn eine feinheitsbezogene Festigkeit aufweist, welche bei einer Dehnung von 4% in einem Bereich von 2,0 cN/dtex bis 2,8 cN/dtex liegt und
**dass** das Multifilamentgarn einen Heißschrumpf bei 177°C in einem Bereich von 4,0% - 7,0% aufweist,
wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

2. Verstärkungslage nach Anspruch 1, **dadurch gekennzeichnet, dass** Multifilamentgarn eine Feinheit von 300 bis 4000 dtex aufweist.

3. Verstärkungslage gemäß einem oder mehreren der vorangehenden Ansprüche, **dadurch gekennzeichnet, dass** der Twistfaktor α des Multifilamentgarnes in einem Bereich von 35 bis 45 liegt, wobei α = Twist [t/m] · (Feinheit [tex]/ 1000)^{1/2}.

4. Verstärkungslage gemäß einem oder mehreren der vorangehenden Ansprüche, **dadurch gekennzeichnet, dass** das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt.

5. Verstärkungslage gemäß Anspruch 4, **dadurch gekennzeichnet, dass** das Multifilamentgarn eine Garnfeinheit von 940 dtex aufweist, dass das Garn eine feinheitsbezogene Festigkeit aufweist, welche bei einer Dehnung von 4% in einem Bereich von 2.0 cN/dtex bis 2.8 cN/dtex liegt und dass das Multifilamentgarn vorzugsweise in einer Dichte von bis zu 210 epdm, vorzugsweise in einer Dichte von etwa 100 epdm in der Verstärkungslage angeordnet ist.

6. Verstärkungslage gemäß Anspruch 4, **dadurch gekennzeichnet, dass** das Multifilamentgarn eine Garnfeinheit von 1400 dtex aufweist, dass das Garn eine feinheitsbezogene Festigkeit aufweist, welche bei einer Dehnung von 4% in einem Bereich von 2.0 cN/dtex bis 2.8 cN/dtex liegt und dass das Multifilamentgarn vorzugsweise in einer Dichte von von bis zu 180 epdm, vorzugsweise in einer Dichte von etwa 90 epdm in der Verstärkungslage angeordnet ist.

7. Verstärkungslage nach einem oder mehreren der vorangehenden Ansprüche 1 bis 4 und 5 oder 6, **dadurch gekennzeichnet, dass** das Multifilamentgarn einen Heißschrumpf bei 177°C in einem Bereich von 5,0% - 6,5% aufweist.

8. Verstärkungslage nach einem der vorangehenden Ansprüche 1 bis 7, **dadurch gekennzeichnet, dass** diese ein Wulstverstärker wie ein Chipper oder Flipper ist.

9. Fahrzeugluftreifen, welcher eine Verstärkungslage nach einem der vorangehenden Ansprüche aufweist.

## Claims

1. Rubberized reinforcing ply for articles made of elastomeric material, preferably for tyres, where the reinforcing ply comprises a large number of reinforcement elements arranged parallel and at a distance from one another, where each reinforcement element consists of polyamide 6.6 and has x1 structure, i.e. is a twisted multifilament yarn made of polyamide 6.6,
**characterized in that**
the tenacity of the raw yarn made of polyamide 6.6 is in the range 1.35 cN/dtex to 1.60 cN/dtex at 4% elongation, that the tenacity of the twisted, dipped and hot-drawn multifilament yarn is in the range 2.0 cN/dtex to 2.8 cN/dtex at 4% elongation and
that the heat shrinkage of the multifilament yarn at 177°C is in the range 4.0%-7.0%,
where tenacity is determined in accordance with ASTM D885-16 and heat shrinkage is determined at 177°C with 0.045 g/dtex pretension and exposure time two minutes.

2. Reinforcing ply according to Claim 1, **characterized in that** the linear density of the multifilament yarn is 300 to 4000 dtex.

3. Reinforcing ply according to one or more of the preceding claims, **characterized in that** the twist factor α of the multifilament yarn is in the range 35 to 45, where α = twist [t/m] · (linear density [tex]/1000)^{1/2}.

4. Reinforcing ply according to one or more of the preceding claims, **characterized in that** the tenacity of the raw yarn made of polyamide 6.6 is in the range 1.35 cN/dtex to 1.50 cN/dtex at 4% elongation.

5. Reinforcing ply according to Claim 4, **characterized in that** the linear density of the multifilament yarn is 940 dtex, that the tenacity of the yarn is in the range 2.0 cN/dtex to 2.8 cN/dtex at 4% elongation and that the density of arrangement of the multifilament yarn in the reinforcing ply is preferably up to 210 epdm, preferably about 100 epdm.

6. Reinforcing ply according to Claim 4, **characterized in that** the linear density of the multifilament yarn is 1400 dtex, that the tenacity of the yarn is in the range 2.0 cN/dtex to 2.8 cN/dtex at 4% elongation and that the density of arrangement of the multifilament yarn in the reinforcing ply is preferably up to 180 epdm, preferably about 90 epdm.

7. Reinforcing ply according to one or more of the preceding Claims 1 to 4 and 5 or 6, **characterized in that** the heat shrinkage of the multifilament yarn at 177°C is in the range 5.0%-6.5%.

8. Reinforcing ply according to any of the preceding Claims 1 to 7, **characterized in that** this is bead reinforcement, for example a chipper or flipper.

9. Pneumatic tyre which comprises a reinforcing ply according to any of the preceding claims.

## Revendications

1. Couche de renforcement caoutchoutée pour articles en matériau élastomère, de préférence pour pneus de véhicules, la couche de renforcement comprenant une pluralité de renforts parallèles et agencés espacés les uns des autres, chaque renfort étant constitué par du polyamide 6.6 et présentant la construction x1, c'est-à-dire étant un fil multifilamentaire vrillé en polyamide 6.6,
**caractérisé en ce que**
le fil brut en polyamide 6.6 présente une résistance relative au titre qui se situe à un allongement de 4 % dans une plage allant de 1,35 cN/dtex à 1,60 cN/dtex,
le fil multifilamentaire vrillé, trempé et étiré à chaud présente une résistance relative au titre qui se situe à un allongement de 4 % dans une plage allant de 2,0 cN/dtex à 2,8 cN/dtex, et
le fil multifilamentaire présente un retrait à la chaleur à 177 °C dans une plage allant de 4,0 % à 7,0 %,
la résistance relative au titre étant déterminée selon ASTM D885-16 et le retrait à la chaleur à 177 °C étant déterminé sous une tension initiale de 0,045 g/dtex avec un temps d'exposition de deux minutes.

2. Couche de renforcement selon la revendication 1, **caractérisée en ce que** le fil multifilamentaire présente un titre de 300 à 4 000 dtex.

3. Couche de renforcement selon une ou plusieurs des revendications précédentes, **caractérisée en ce que** le coefficient de torsion α du fil multifilamentaire se situe dans une plage allant de 35 à 45, avec α = torsion [t/m] · (titre [tex]/1000)^{1/2}.

4. Couche de renforcement selon une ou plusieurs des revendications précédentes, **caractérisée en ce que** le fil brut en polyamide 6.6 présente une résistance relative au titre qui se situe à un allongement de 4 % dans une plage allant de 1,35 cN/dtex à 1,50 cN/dtex.

5. Couche de renforcement selon la revendication 4, **caractérisée en ce que** le fil multifilamentaire présente un titre de fil de 940 dtex, **en ce que** le fil présente une résistance relative au titre qui se situe à un allongement de 4 % dans une plage allant de 2,0 cN/dtex à 2,8 cN/dtex, et **en ce que** le fil multifilamentaire est agencé dans la couche de renforcement de préférence en une densité de jusqu'à 210 epdm, de préférence en une densité d'environ 100 epdm.

6. Couche de renforcement selon la revendication 4, **caractérisée en ce que** le fil multifilamentaire présente un titre de fil de 1 400 dtex, **en ce que** le fil présente une résistance relative au titre qui se situe à un allongement de 4 % dans une plage allant de 2,0 cN/dtex à 2,8 cN/dtex, et **en ce que** le fil multifilamentaire est agencé dans la couche de renforcement de préférence en une densité de jusqu'à 180 epdm, de préférence en une densité d'environ 90 epdm.

7. Couche de renforcement selon une ou plusieurs des revendications 1 à 4 et 5 ou 6 précédentes, **caractérisée en ce que** le fil multifilamentaire présente un retrait à la chaleur à 177 °C dans une plage allant de 5,0 % à 6,5 %.

8. Couche de renforcement selon une ou plusieurs des revendications 1 à 7 précédentes, **caractérisée en ce que** celle-ci est un renfort de talon, tel qu'un chipper ou un flipper.

9. Pneu de véhicule, qui comprend une couche de renforcement selon l'une quelconque des revendications précédentes.
